# EUROPÄISCHE PATENTANMELDUNG

(11) **EP 0 795 575 A2**
(43) Veröffentlichungstag der Anmeldung: **17.09.1997**
(21) Anmeldenummer: 97103450.9
(22) Anmeldetag: 03.03.1997
(51) Int. Cl.: C08J 5/18, C08L 75/04

(54) **Folie aus Acrylat-Terpolymer-Mischungen und deren Verwendung**

(30) Priorität: 15.03.1996 DE 19610265
(71) Anmelder: WOLFF WALSRODE AG, D-29655 Walsrode (DE)
(72) Erfinder: Schultze, Dirk, Dr., 29683 Fallingbostel (DE)
(74) Vertreter: Braun, Rolf, Dr.

(57) **Zusammenfassung**

Die vorliegende Erfindung betrifft eine Folie aus Acrylat-Terpolymer-Blends, wobei sie im wesentlichen aus Mischungen weicher Acrylat-Polymerisate, die ihrerseits aus Acrylat-, Styrol- und Acrylnitril-Monomeren aufgebaut sind, mit thermoplastischen Polyurethanen mit Shore-Härten kleiner 90 A, gemessen nach DIN 53 505 besteht.

## Beschreibung

Die Erfindung betrifft Folien, die aus Mischungen von thermoplastischen Acrylat-Polymeren und thermoplastischen Polyurethanen (TPV) hergestellt werden sowie deren Verwendung als Hülle für füllbare Hohlkörper, wie z.B. orthopädische Stützkissen.

Die TPU als Stoffklasse, ihre Eigenschaften und Verarbeitungsmöglichkeiten sind im Kunststoff-Handbuch, Band 7, Polyurethane, Hrsg. G. Oertel, 2. Aufl., Hanser-Verlag, München 1983 beschrieben.

Einschichtige Folien aus thermoplastischen Polyurethanen (TPU), Verfahren zu ihrer Herstellung sowie ihre Verwendung sind nach dem Stand der Technik beispielsweise aus der EP 0 308 683, der EP 0 526 858, der EP 0 571 868 oder der EP 0 603 680 bekannt. Ebenso ist die Herstellung von TPU-Folien unter Einsatz von im wesentlichen unverträglichen Polymeren als Mattierungsmittel in TPU-Elastomeren z.B. in der DE 41 26 499 beschrieben.

Folien aus Acrylat-basierenden Polymerharzen sind beispielsweise von Braese und Piejko in: Kunststoffe, 82. Jhrg., Nr. 3, Seiten 223-228 beschrieben. Thermoplastische Acrylate, auch mit Elastomer-Charakter, sind ebenfalls in der Literatur beschrieben. Hierzu zählen die unter dem Handelsnamen Lotryl der Fa. Atochem bekannten Ethylen-Acrylat-Copolymere. Aber beispielsweise auch die von der Fa. Röhm synthetisierten Acrylat-Kammpolymere aus Butylacrylat-Hauptketten mit Methylmethacrylat-Seitenketten vereinen elastische und thermoplastische Eigenschaften.

Weiche Acrylat-Polymere sowie Blends aus denselben sind beispielsweise von Nigen und Tandon in: Kunststoffe 85. Jhrg., Nr.9, Seiten 1383 bis 1387 beschrieben. Die dort dargelegten Mischungen weisen aber zu niedrige Festigkeiten auf um als vergleichsweise dünne Folien zu beispielsweise Luft-gefüllten orthopädischen Stützkissen oder anderen elastischen Formkörpern verarbeitet zu werden. Die erwähnten Festigkeiten liegen im Bereich von 10 N/mm² für Folien mit Shore-D-Härten um 30. Mit den dort beschriebenen Polymer-Mischungen lassen sich höhere Festigkeiten nur im deutlich höheren Shore-D-Härte-Bereich von 55 - 60 erzielen.

Ebenso ist in der Firmenschrift "Sunigum" der Firma Goodyear Tire & Rubber Compagny, Akron, Ohio (1994) auf die Mischbarkeit von weichen Acrylat-Polymerisaten mit polaren halogenfreien Kunststoffen hingewiesen. Das dort beschriebene Kalander-Verfahren zur Ausformung von Bahn-förmigen Halbzeugen ist aber insbesondere zum thermischen Aufschluß von (teil-)kristallinen Polymeren wie den TPU nur bedingt geeignet, da es auf Kalanderanlagen nicht gelingt, die Schmelzwärme bei ausreichend hohem Maschinendurchsatz einzubringen, wie es von Krüger oder Hoppe im Kunststoff-Handbuch, Band 7, Polyurethane, Hrsg. G. Oertel, 2. Aufl., Hanser-Verlag, München 1983 beschrieben wird.

Blends aus TPU und verschiedenen anderen Polymerharzen sind in der Literatur ebenfalls beschrieben. Seit 1978 sind TPU/ABS-Blends bekannt, wie es Utracki in: Polymer Engineering and Science, 35 Jhrg.(1995), Nr. 1, Seiten 2-17 beschreibt. Blends aus reaktiven Harzen, die aber ein beeinträchtigtes Tiefziehverhalten aufweisen, sind beispielsweise in der DE 39 27 720 erwähnt.

Bonk, Drzal, Georgacopoulos und Shah führen in: Proceedings Annual Technical Conference of Plastics Engineers, Antec, 1985, Seiten 1300 - 1303 begrenzte Mischungsmöglichkeiten von TPU mit Acrylaten aus, erkennen jedoch keine Vorteile. Eine weitere Übersicht über die Möglichkeiten des Blendens von TPU mit härterem Polymethylmethacrylat geben Deanin, Driscoll und Krowchun in: Organic Coatings Plastics Chemistry, 40. Jhrg (1979), Seiten 664 667. Ebenso beschreiben Santra, Chaki, Roy, Nando in: Angewandte Makromolekulare Chemie, 213. Jhrg (1993), Seiten 7 -13 Mischungsmöglichkeiten von TPU mit Ethylen-co-Methacrylat-Harzen. Solche Blends dienen aber dazu, die härteren Methacrylat-Polymerisate schlagzäh einzustellen, wie es von Heim, Wrotecki, Avenel und Gaillard in: Polymer, 34. Jhrg, (1993), Nr. 8, Seiten 1653 -1660 ausführen.

In der US 4 179 479 werden Blends aus TPU und harten Thermoplasten beschrieben, zu denen Terpolymerisat-Harze aus Methylmethacrylat, Butylacrylat und Styrol als Compatibilizer zur Verbesserung der Homogenität der Mischung zugegeben werden. Auch in diesem Fall werden Blends erhalten, die härter als die eingesetzten TPU sind.

Weich elastische Folien aus PVC-TPU-Blends sind von Lavallée, Carmel, Utracki, Szabo, Keough und Favis in: Polymer Engineering and Science, 32 Jhrg. (1992), Nr. 22, Seiten 1716-1726 beschreiben, sobald aber weiche Einstellungen erzielt werden sollen, ist die mögliche Weichmachermigration zu berücksichtigen. Die für die PVC-Verarbeitung üblichen niedermolekularen Weichmacher, deren Zugabe zur Erzielung weicher Blends notwendig ist, sind Substanzen aus der Gruppe der Phthalate, die von deren Anbietern vielfach als potentiell fruchtschädigend eingestuft sind. Gesundheitliche Beeinträchtigungsmöglichkeiten sind bei Anwendungen, die für den Hautkontakt vorgesehen sind, zu vermeiden.

Füllbare Hohlkörper wie z.B. weich-elastische Nackenkissen werden heute allgemein mit Fluiden gefüllt. Hierzu benötigt man weiche, anschmiegsame, hautfreundliche Umhüllungen. Diese müssen sich durch einen guten Griff, der auch als Haptik bezeichnet wird, auszeichnen. Umhüllungen werden heute besonders durch Verschweißung aus tiefgezogenen, anatomisch ausgebildeten Vorformlingen erhalten. Dafür benötigt man dicke, thermoplastisch umformbare Folien. Diese Folien müssen sich oftmals nicht nur gut verschweißen sondern für eine zügige und damit preisgünstige Herstellung nach dem Trennschweißverfahren verbinden und zugleich trennen lassen.

Am Markt erhältliche weiche Thermoplast-Folien mit ausreichender Festigkeit weisen aber Nachteile durch Geräuschentwicklung beim Reiben gegen sich selbst auf. Solche Geräusche stören bei der Anwendung orthopädischer Nackenkissen und beeinträchtigen das Wohlbefinden und damit den Erholungsprozeß des Nutzers.

Es galt, möglichst weiche Kissen mit angenehmer Haptik zur Verfügung zu stellen. Dies beinhaltet in erster Linie eine weiche Folie mit angenehmer Haptik, die bei der Reibung gegen sich selbst möglichst wenig Geräusche erzeugt, sich außerdem preiswert herstellen sowie verarbeiten läßt.

Überraschenderweise gelang es, Kissen sowie die für ihre Herstellung notwendigen Umhüllungsfolien aus Kunststoffharz-Mischungen der eingangs erwähnten Gattung herzustellen.

Für den einschlägig vorgebildeten Fachmann nicht naheliegend war, daß die erfindungsgemäßen Folien bei der Verformung kaum Geräusche bilden. Diese Eigenschaft läßt sich mit dem für sehr weiche Folien ungewöhnlich niedrigen Reibkoeffzienten korrelieren. Erfindungsgemäß bevorzugt sind Folien, die bei einer Shore-Härte kleiner 80 einen Reibkoeffizienten gemessen nach DIN 53 375 im Kontakt Folie gegen Metall kleiner 1,5 für die Haftreibzahl und 2,0 für die Gleitreibzahl besitzen.

Geeignete thermoplastischen Polyurethanelastomeren für die erfindungsgemäßen Mischungen sind vorzugsweise aus überwiegend linearen thermoplastischen Polyurethanelastomeren aufgebaut, deren längerkettige Diolkomponente ein Polyester oder Polyether ist, und die eine Shore-Härte von vorzugsweise 75 - 90 A, besonders bevorzugt 75 - 80 A, bestimmt nach DIN 53 505, aufweisen.

Geeignete thermoplastische Polyurethane sind beispielsweise unter den Handelsnamen Desmopan, Elastollan, Estane, Morthane oder Texin erhältlich.

In einer besonders geeigneten Ausführung weisen die erfindungsgemäßen Folien elastische Urethan-Elastomer-Rezepturkomponenten auf, deren Weichsegment-Phase zu einem überwiegenden Teil aus Ether-Weichsegment-Bausteinen gebildet wird.

Für die erfindungsgemäßen Mischungen aus thermoplastischen Elastomeren geeignete Acrylat-Polymer-Harze haben Shore-A-Härten kleiner 80. Bevorzugte Acrylat-Polymer-Harze haben einen Acrylat-Anteil von wenigstens 45 % Gew.-%, einen Styrol-Anteil von wenigstens 12 Gew.-% und einen Acrylnitril-Anteil von wenigstens 12 Gew.-%, jeweils bezogen auf auf den Anteil der Monomer-Reste an der Gesamtmasse des eingesetzten thermoplastischen Acrylat-Harzes. Geeignete weiche Acrylat-Polymerisate sind beispielsweise unter dem Handelsnamen Sunigum erhältlich.

Elias führt in: Makromoleküle, Bd.2, 5. Aufl. Hüthig und Wepf, Heidelberg, 1992 aus, daß bei Polymergemischen ein Polymer das Lösungsmittel für das andere darstellt. Polymere sind in den seltensten Fällen mischbar, da bei Polymergemischen die Gibbs-Mischungsenergie meist positiv ist. Für die meisten Polymermischungen oder Blends findet man deshalb insbesondere makroskopiesch beobachtbare mechanische Eigenschaften, die von den anteiligen Eigenschaften der Mischungskomponenten des jeweiligen Blends deutlich abweichen. Bei den hier beschriebenen erfindungsgemäßen Blend-Folien verändern sich die makroskopisch beobachteten Eigenschaften erstaunlicherweise aber gemäß der mengenmäßigen Anteile der Mischungskomponenten und ohne das Auftreten deutlicher scherungsabhängiger Entmischungsstrukturen. Die für diese Erfindung gemischten Polymerharze besitzen in sich bereits jeweils mehrphasige Strukturen, so daß bei der vorliegenden Erfindung von einer gegenseitigen Aufweitung der netzförmigen Strukturen der Mischungspartner ausgegangen werden muß. Dadurch können die erfindungsgemäßen Mischungen zu Folien verarbeitet werden, die Eigenschaften aufweisen, die nicht naheliegenderweise die entsprechenden anteiligen Eigenschaften der eingesetzten gemischten Polymerharze repräsentieren.

Sehr gut für die Folienherstellung nutzbare thermoplastische Acrylat-Elastomer-Harze enthalten Butylacrylat als wesentlichen konstitutionellen Bestandteil.

Erfindungsgemäß besonders geeignete Folien zeichnen sich dadurch aus, daß sie einen thermoplastischen Acrylat-Elastomer-Anteil von mindestens 25 Gew.-% und einen thermoplastischen Polyurethan-Anteil von mindestens 50 Gew.-% aufweisen.

Eine geeignete Ausführung der erfindungsgemäßen Folien enthält zusätzlich gebräuchliche Additive aus der Gruppe umfassend
I. Antiblockmittel, anorganische oder organische Abstandshalter,
II. Gleit- oder Entformungsmittel,
III. Pigmente oder Füllstoffe und
IV. Stabilisatoren.

Die gebräuchlichen Additive, die in den erfindungsgemäßen Folien enthalten sein können, sind beispielsweise bei Gächter und Müller beschrieben in: Kunststoff-Additive, Carl Hanser Verlag München, 3. Ausgabe (1989).

Besonders geeignete anorganische Additive kommen aus der Gruppe umfassend
V. natürliche und synthetische Kieselsäure oder Silikate, auch Schichtsilikate,
VI. Titandioxid,
VII. Calciumcarbonat.

Erfindungsgemäß bevorzugt sind Folien mit einer Gesamtdicke zwischen 20 µm und 500 µm.

Zur Herstellung der erfindungsgemäßen Folie eignen sich besonders die gängigen thermischen Umformverfahren zur Verarbeitung von Kunststoffen zu Flächengebilden durch Extrusion, die bevorzugt nach dem Blasfolienverfahren erfolgt.

Die erfindungsgemäßen Folien können mit den bekannten physikalischen und chemischen Behandlungsmethoden wie beispielsweise der Corona-Behandlung ein- oder beidseitig in ihren Oberflächeneigenschaften modifiziert werden.

Polymermischungen, -blends oder -verschnitte können durch mechanisches Mischen von Schmelzen, Latices oder Lösungen zweier separat hergestellter Polymerharze oder in-situ Polymerisation von Monomeren in Gegenwart eines vorgebildeten Polymerharzes hergestellt werden.

Günstigerweise geschieht dies durch Schmelze-Vermischung zweier separat hergestellter Polymerharze. Hierzu werden die Polymerharze, die üblicherweise in Form von Ballen, Granulaten oder Pulvern vorliegen, in Knetern oder mit Extrudern vermischt. Die erfindungsgemäß geeigneten thermoplastischen Polymerharze werden dabei über die Glas- bzw. Schmelztemperatur erwärmt. Eine gute Durchmischung wird bei höheren Temperaturen und/oder unter starken Scherfeldern erreicht.

Erfindungsgemäß bevorzugt ist die Herstellung einer Folie aus bereits vor der Folienverarbeitung hergestellten Compounds. Hierfür werden die für die Folienextrusion eingesetzten Polymer-Harze vorab in einem Compoundierschritt einer Vormischung in erweichtem Zustand unterzogen. Geeignete Werkzeuge für einen solchen Mischungsschritt sind die in ihrer Art bekannten Compoundier-Werkzeuge. Als günstig haben sich Werkzeuge mit mehreren Schnecken, insbesondere aber die für die Compoundierung beliebten Zwei-Schnecken-Kneter, erwiesen.

Ebenso als günstig erwies sich die Herstellung einer Folie nach einem Verfahren, daß die Vorvermischung der eingesetzten Rohstoffe in dem nicht erweichten festen Zustand beinhaltet. Hierbei erfolgt die Vorvermischung vor dem thermischen Aufschluß der Folienrohstoffe.

Die erfindungsgemäße Folie eignet sich in Form von Folienschläuchen aber auch in Form von Einzellagen oder -bahnen zur Verschweißung gegen sich selbst. Sie eignet sich aber ebenfalls zur Verschweißung gegen steifere Folien, z.B. zur Ausformung von Luft-gefüllten orthopädischen Stützkissen mit bevorzugter Deformationsrichtung unter Belastung.

Die Verschweißung kann nach allen für Acrylat-Polymere oder TPU gängigen Techniken, auch durch thermisches- bzw. Hochfrequenzschweißen gegen sich selbst oder andere geeignete Subtrat-Werkstoffe durchgeführt werden. Geeignete Substrat-Werkstoffe sind insbesondere die in ihrer Art bekannten TPU.

Möglichkeiten, sich beim Aufblasen bzw. Füllen asymmetrisch verformende kissenförmige Elemente für Dämpfungsanwendungen herzustellen, bieten sich durch die nicht vollflächige Verbindung einer relativ weichen, erfindungsgemäßen Folie mit Shore-A-Härten kleiner 90, bevorzugt kleiner 80, gegen andere jeweils härtere Folien bzw. Substrate. Die Härte der Substrate liegt in solchen Fällen günstigerweise im Bereich größer 85 Shore-A, bevorzugt größer 90 Shore-A.

Die im Rahmen der nachfolgenden Beispiele und Vergleichsbeispiele beschriebenen Folien wurden durch Blasfolienextrusion hergestellt. Die zum Aufschluß thermoplastischer Harze geeigneten Schneckenwerkzeuge sind in ihrem Aufbau z.B. von Wortberg, Mahlke und Effen in: Kunststoffe, 84 (1994) 1131-1138, von Pearson in: Mechanics of Polymer Processing, Elsevier Publishers, New York, 1985 oder der Fa. Davis-Standard in: Paper, Film & Foil Converter 64 (1990) S. 84 - 90 beschrieben. Werkzeuge zum Ausformen der Schmelze zu Folien sind u.a. von Michaeli in: Extrusions-Werkzeuge, Hanser Verlag, München 1991 erläutert.

### Beispiel A:

Mit Hilfe eines Blasfolienwerkzeuges wurde eine weiß-opake Folie hergestellt, für die ein vorgefertigtes Compound als Rohstoff eingesetzt wurde. Das Compound bestand aus 28 Gew.-% weichen Acrylat-Styrol-Acrylnitril-Terpolymeren der Shore-A-Härte 53, 68,5 Gew.-% TPU der Shore-A-Härte 80 mit Polypropylenoxid-Weichsegmenten, 2 Gew.-% Calciumcarbonat und 1,5 Gew.-% niedermolekularen Amid-Wachsen.

Die Extrusionseinrichtung wurde mit Temperaturen zwischen 160°C und 200°C betrieben. Der Compound-Schmelzestrom wurde in einem Blasfolienkopf mit einer Verarbeitungstemperatur von 190°C durch eine Ringspaltdüse mit einem Durchmesser von 110 mm ausgetragen. Durch Anblasen mit Luft wurde die ringförmige Schmelzefahne abgekühlt, anschließend flachgelegt, im Randbereich beschnitten und in Form von 200 µm dicken Einzelbahnen aufgewickelt.

### Beispiel B:

Eine opake Folie wurde analog zu Beispiel A mit 200 µm Dicke hergestellt. Die Rohstoffe wurde kurz vor dem Einzug des Extruders zusammengeführt, wobei die Zusammensetzung des Blends durch die Anteile 83 Gew.-% TPU, 14 Gew.-% Acrylat-Terpolymer, 1 Gew.-% Calciumcarbonat und 2 Gew.-% Wachse repräsentiert wird.

### Beispiel C:

Eine Folie wurde wiederum analog zu Beispiel A in 200 µm Dicke hergestellt. Dem in Beispiel A eingesetzten Compound wurde ein TPU-basierendes Farbmasterbatch bei Einzug in den Extruder zugesetzt, so daß die Zusammensetzung des blau Blends bei 25 Gew.-% Acrylat-Terpolymer, 70 Gew.-% TPU, 2 Gew.-% Calciumcarbonat, 1,5 Gew.-% Titandioxid, 1 Gew.-% Wachse und 0,5 Gew.-% organische Farbpigmente lag.

### Vergleichsbeispiel 1:

Eine TPU-Folie wurde unter den für Beispiel A genannten Parametern hergestellt. Die Zusammensetzung der transparenten 200 µm dicken Folie lag bei 98 Gew.-% TPU mit Polypropylenoxid-basierender Weichsegmentphase und 2 Gew.-% niedermolekularen Amid-Wachsen.

### Vergleichsbeispiel 2:

Eine 200 µm dicke Acrylat-Styrol-Acrylnitril-Terpolymer-Folie wurde unter Einsatz von 6 Gew.-% Calciumcarbonat und 94 Gew.-% Acrylat-Terpolymer hergestellt. Die Verarbeitungsparameter entsprachen Beispiel A.

### Vergleichsbeispiel 3:

Unter den gleichen Verarbeitungsbedingungen wie in Beispiel A wurde eine 200 µm dicke Blendfolie aus 50 Gew.-% niedrigdichten Polyethylens, 49 Gew.-% TPU - analog Beispiel A - und 1 Gew.-% niedermolekularer Amidwachse hergestellt.

Bewertung der im Rahmen der Beispiele und Vergleichsbeispiele hergestellten Folien:

Die Bewertung der in den Beispielen und Vergleichsbeispielen hergestellten Folien erfolgte teilweise hinsichtlich anwendungsrelevanter Eigenschaften wie Geräuschentwicklung beim Reiben gegen sich selbst, Haut-/Griffreundlichkeit bzw. Haptik, Trennschweißverhalten und Platzdruckfestigkeit. Die Bewertung dieser relevanten Eigenschaften wurden durch subjektive Beurteilung durch mehrere unabhängige Personen erhalten und die Bewertungen in Tabelle 1 angegeben. Soweit möglich wurden die subjektiven Beurteilungen durch genormte Prüfverfahren verifiziert.

So korreliert die Beurteilung der Platzdruckfestigkeit mit den Festigkeiten, die im Zugversuch nach DIN 53 455 ermittelt wurden. Zur Beurteilung der Platzdruckfestigkeit wurden Beutel aus den gefertigten Folien geschweißt, mit Wasser befüllt und aus größerer Höhe fallen gelassen.

Geräuschentwicklung und Haptik sind Meßgrößen, die Mischgrößen aus u.a. Shore-Härte analog zu DIN 53 505, der Spannung bei niedrigen Verformungen (für Elastomere hier: 100%) gemäß DIN 53 455 und Reibkoeffizienten nach DIN 53 375 repräsentieren. Geräuschentwicklung und Haptik wurden manuell an den gefertigten Folienbahnen beurteilt.

Das Trennschweißverhalten ist wiederum eine Mischgröße die u.a. Elemente der Weiterreißfestigkeit und des Erweichungsbereiches beeinhaltet. Zur Beurteilung der Trennschweißbarkeit wurden übereinandergelegte Folienbahnen mit einem geheizten Metallstab durchgetrennt und der Fortschritt des Trennvorganges sowie die Güte der Schweißnaht begutachtet.

Der Erweichungsbereich bestimmt die Verarbeitungseigenschaften beim Trennschweißen als auch die spätere Anwendungssicherheit. Er wurde mit einer Kofler-Heizbank bestimmt. Von den zu messenden Folien wurden Folienstreifen von ca. 200 mm Länge und ca. 4 mm Breite geschnitten und auf die Kofler-Heizbank gelegt. Nach ca. 2 Minuten wurde die Messung durchgeführt. Dazu wurde die Probe langsam, startend von der niedrigsten zur höchsten Temperatur, in einen Winkel von ca. 90° von der Kofler-Heizbank abgezogen. Die Stelle, an der die Folie riß und der Rest der Folie auf der Kofler-Bank haften blieb, bezeichnete den Erweichungspunkt. Es wurden pro Muster fünf Messungen durchgeführt. Von den fünf Werten wurden der jeweils höchste und niedrigste Wert als Erweichungsbereich angegeben.

Die Sauerstoffdurchlässigkeit (O2-Du, DIN 53 380, Teil 3) und die Wasserdampfdurchlässigkeit (WDDu, DIN 53 122 bei 23°C, 85% relative Feuchte) spiegeln wichtige anwendungsrelevante Größen wieder. Für die Befüllung von beispielsweise kissenförmigen Gebilden wie Nackenstützen oder orthopädischen Bettunterlagen ist es von großer Wichtigkeit, daß das Füllmedium nicht oder zumindest deutlich gehemmt entweicht. Hier gelang durch die erfindungsgemäßen Folien eine Optimierung zwischen den Eigenschaften der TPU und der weichen Acrylat-Terpolymere in bezug auf sowohl Sauerstoff- als auch Wasserdampfdurchlässigkeit.

In der nachfolgenden Tabelle sind charakteristische Daten der im Rahmen der Beispiele und Vergleichsbeispiele hergestellten Folien wiedergegebenen. Diese zeigen deutlich, daß die in den Beispielen beschriebenen erfindungsgemäßen Folien den im Rahmen der Vergleichsbeispiele dargestellten Folien gegenüber im Vorteil sind.

**Tabelle 1**

| Eigenschaften der im Rahmen der Beispiele und Vergleichsbeispiele hergestellten Folien | | | | | | | | |
|---|---|---|---|---|---|---|---|---|
| Eigenschaft | Bestimmungsmethode | Einheit | Beispiel A | Beispiel B | Beispiel C | Vergleichsbeispiel 1 | Vergleichsbeispiel 2 | Vergleichsbeispiel 3 |
| Geräuschentwicklung beim Reiben | siehe Text | ./. | gering | mittel | gering | deutlich | gering | deutlich |
| Haptik | siehe Text | ./. | angenehm | angenehm | angenehm | stumpf | angenehm weich | sehr steif |
| Haftreibzahl | DIN 53375 | ./. | 1,1 | 1,4 | 0,8 | 1,4 | 0,9 | 0,8 |
| Gleitreibzahl | DIN 53375 | ./. | 1,7 | 1,6 | 1,3 | 1,7 | 1,1 | 0,9 |
| WDDu | DIN 53122 | g/(m²d) | 85 | 87 | 80 | 92 | 77 | 50 |
| O₂-Du | DIN 53380, Teil 3 | Ncm³/(m²d bar) | 1500 | 1300 | 1400 | 1200 | 1800 | 700 |
| Erweichungsbereich | siehe Text | °C | 163-165 | 164-165 | 165-166 | 157-161 | 110-125 | 155-158 |
| Shore-A-Härte | DIN 53505 | ./. | 77 | 79 | 76 | 80 | 53 | 95 |
| Spg. bei 100% Dehnung | DIN 53455 | N/mm² | 3,7 | 3,9 | 3,6 | 4,4 | 2,7 | 6,0 |
| Reißfestigkeit | DIN 53455 | N/mm² | 14 | 23 | 17 | 31 | 8 | 7 |
| Reißdehnung | DIN 53455 | % | 750 | 800 | 700 | 800 | 300 | 150 |
| Weiterreißfestigkeit | DIN 53515 | N/mm | 30 | 36 | 32 | 40 | 15 | 18 |
| Platzdruckfestigkeit | siehe Text | ./. | gut | gut | gut | sehr gut | gering | sehr gering |
| Trennschweißbarkeit | siehe Text | ./. | sehr gut | sehr gut | sehr gut | mäßiges Trennen | sehr gut | nicht schweißbar |

Aus Tabelle 1 ist deutlich erkennbar, daß die in den Beispielen dargestellten Folien für die Ummantelung Fluid-gefüllter Kissen den nach dem Stand der Technik bekannten Folien aus den Vergleichsbeispielen deutlich überlegen sind. Gegenüber den reinen Folien aus weichen Acrylat-Elastomeren, wie sie in Vergleichsbeispiel 2 beschrieben sind, bieten die erfindungsgemäßen Folien Vorteile bei den Festigkeiten. Im Vergleich zu den reinen TPU-Folien aus Vergleichsbeispiel 1 bieten sie eine verbesserte Haptik, Geräuscharmut und ein verbessertes Verarbeitungsverhalten. Im Gegensatz zu TPU/Polyolefin-Blends, wie sie in Vergleichsbeispiel 3 beschrieben sind, bieten sie zudem homogenen Eigenschaftsbilder die den jeweiligen Anteilen der eingesetzten TPU- und Acrylat-Harze an der Mischung entsprechen.

## Patentansprüche

1. Folie aus Acrylat-Terpolymer-Blends, dadurch gekennzeichnet, daß sie im wesentlichen aus Mischungen weicher Acrylat-Polymerisate, die ihrerseits aus Acrylat-, Styrol- und Acrylnitril-Monomeren aufgebaut sind, mit thermoplastischen Polyurethanen mit Shore-Härten kleiner 90 A, gemessen nach DIN 53 505 besteht.

2. Folie nach Anspruch 1, dadurch gekennzeichnet, daß die zu ihrer Herstellung verwandte Rohstoffmischung eine Shore-A-Härte kleiner 80 aufweist, gemessen nach DIN 53 505.

3. Folie nach Anspruch 1 und/oder 2, dadurch gekennzeichnet, daß der Anteil des als thermoplastische Urethan-Elastomer-Rezepturkomponente eingesetzten Harzkomponente zu einem überwiegenden Teil Ether-Weichsegment-Bausteine aufweist.

4. Folie nach einem der vorangehenden Ansprüche, dadurch gekennzeichnet, daß sie bei einer Shore-Härte kleiner 80 einen Reibkoeffizienten gemessen nach DIN 53 375 im Kontakt Folie gegen Metall kleiner 1,5 für die Haftreibzahl und 2,0 für die Gleitreibzahl besitzt.

5. Folie nach einem der vorangehenden Ansprüche, dadurch gekennzeichnet, daß sie einen thermoplastischen Acrylat-Elastomer-Anteil von mindestens 25 Gew.-% und einen thermoplastischen Polyurethan-Anteil von mindestens 50 Gew.-% aufweist.

6. Folie nach einem der vorangehenden Ansprüche, dadurch gekennzeichnet, daß das thermoplastische Acrylat-Elastomer einen Acrylat-Anteil von wenigstens 45 %Gew.-%, einen Styrol-Anteil von wenigstens 12 Gew.-% und einen Acrylnitril-Anteil von wenigstens 12 Gew.-%, jeweils bezogen auf auf den Anteil der Monomer-Reste an der Gesamtmasse des eingesetzten thermoplastischen Acrylat-Harzes.

7. Folie nach einem der vorangehenden Ansprüche, dadurch gekennzeichnet, daß sie Butylacrylat als thermoplastische Acrylat-Elastomer Komponente enthält.

8. Folie nach einem der vorangehenden Ansprüche, dadurch gekennzeichnet, daß sie zusätzlich gebräuchliche Additive aus der Gruppe umfassend
I. Antiblockmittel, anorganische oder organische Abstandshalter,
II. Gleit- oder Entformungsmittel,
III. anorganische oder organische Pigmente oder Füllstoffe und
IV. Stabilisatoren
enthält.

9. Verfahren zur Herstellung einer Folie nach wenigstens einem der vorangehenden Ansprüche, dadurch gekennzeichnet, daß die Rohstoffmischung durch einen Extrusionsprozeß aufgeschlossen und durch ein nachgeschaltetes Folienwerkzeug ausgetragen wird.

10. Verfahren zur Herstellung einer Folie nach wenigstens einem der vorangehenden Ansprüche, dadurch gekennzeichnet, daß die Folie durch ein einer Extrusionseinrichtung nachgeschaltetes Blasfolienwerkzeug ausgeformt und verarbeitet wird.

11. Verfahren zur Herstellung einer Folie nach wenigstens einem der vorangehenden Ansprüche, dadurch gekennzeichnet, daß wenigstens zwei der als Rohstoffe für die Folienextrusion eingesetzten Polymer-Harze vorher in einem Compoundierschritt einer Vormischung in erweichtem Zustand unterzogen wurden.

12. Verfahren zur Herstellung einer Folie nach wenigstens einem der vorangehenden Ansprüche, dadurch gekennzeichnet, daß die zur Extrusion eingesetzten Rohstoffe in nicht erweichtem Zustand gemischt werden.

13. Verwendung einer Folie nach einem der vorangehenden Ansprüche 1 bis 8 als Hülle eines füllbaren Kissen- Ball- oder Blasen-förmigen Körpers.
